(19) Europäisches Patentamt
European Patent Office
Office européen des brevets

(11) **EP 3 902 040 B1**

(12) **EUROPEAN PATENT SPECIFICATION**

(45) Date of publication and mention of the grant of the patent:
**07.06.2023 Bulletin 2023/23**

(21) Application number: **20192681.3**

(22) Date of filing: **25.08.2020**

(51) International Patent Classification (IPC):
***H01M 8/04082*** *(2016.01)* ***C01B 3/10*** *(2006.01)*
***H01M 8/0606*** *(2016.01)*

(52) Cooperative Patent Classification (CPC):
**H01M 8/0606; C01B 3/0026; C01B 3/063; C25B 1/04; H01M 8/04216;** C01B 2203/04; C01B 2203/0495; C01B 2203/06; C01B 2203/066; Y02E 60/32; Y02E 60/36; Y02E 60/50; Y02E 70/30; Y02P 20/133

(54) **POWERPLANT FOR SEASONAL ENERGY STORAGE**

KRAFTWERK FÜR SAISONALE ENERGIESPEICHERUNG

CENTRALE ÉLECTRIQUE POUR LE STOCKAGE SAISONNIER D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.10.2021 Bulletin 2021/43**

(73) Proprietor: **ETH Zurich**
**8092 Zürich (CH)**

(72) Inventors:
- **Stark, Wendelin Jan**
  **4900 Langenthal (CH)**
- **Lustenberger, Urs Benjamin**
  **8093 Zurich (CH)**

(74) Representative: **Grimm, Siegfried**
**E. Blum & Co. AG**
**Vorderberg 11**
**8044 Zürich (CH)**

(56) References cited:
**DE-A1-102012 217 290** **DE-A1-102017 201 861**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 902 040 B1

## Description

## Summary:

The present invention relates to a seasonal energy storage plant and reactors useful in such plants. The reactors are inherently explosion - proof and suited for large scale applications. The energy storage plant is suited for transferring renewable energy from high productive periods to low productive periods, such as solar energy from summer months to winter months, and also adapted for large scale applications.

## Background:

It is generally accepted that energy production requires improvements. Many governments have implemented strategies to achieve reliable and sustainable supply of electrical energy for both domestic use and industrial use. For example, the three pillars of the Swiss Energy Strategy 2050 comprise the stepwise phase-out of nuclear power, measures for increasing renewable energy production, and improving the energy efficiency of industry, buildings, mobility, and devices.

Generally, nuclear power plants constantly and reliably produce electricity. In contrast, renewable energy sources (e.g. photovoltaic power and wind power) heavily depend on weather conditions. In the long term, the transition (or substitution) from nuclear to renewable energy requires additional measures to match supply and demand at all times such as peak shaving, load shifting and energy storage.

It is generally accepted that production and consumption of energy fluctuate; an electrical grid therefore needs to compensate short-term, mid-term and long-term fluctuations. Renewable power sources heavily depend on weather conditions. Thus, production of renewable energy fluctuates on multiple time scales: hourly, daily, and seasonally. To maximize renewable energy production at all times, the temporal surplus between produced and consumed energy has to be stored for a certain time.

Energy storage systems using the redox pair $Fe_3O_4$/Fe are known and described in DE102017201861. The systems disclosed in that document are complicated and require movement of solid material (Fe / $Fe_3O_4$) from storage devices to reactors and solid-gas separators. Such systems require a high level of maintenance and/or are prone to malfunction. Further, the system contains hydrogen and inherently bears the risk of an explosive incident. As a consequence, such systems show disadvantages for large scale applications.

Energy storage systems using the redox pair $Fe_3O_4$ / Fe are also described in PCT/EP2020/054844 (unpublished). Although suitable, the systems described therein are tailored for domestic use. The specific requirements of large scale units are not fully addressed. DE102012217290 discloses an electrical energy store suggesting the use of iron/iron oxide as an energy storage electrode. Given the structure of the storage electrode and the channels containing $H_2$/$H_2O$ as shuttle gas, this device is inherently prone to explosion and thus not safe.

The redox pair iron oxide / iron and its use for storing energy is known and well investigated. For example, Selan et al (J. of Power Sources 61,1995,247) examine the process cycle sponge iron / hydrogen / iron oxide. According to the authors, the cycle offers a simple possibility to store the energy of synthesis gases in the form of sponge iron. Further, Pineau et al (Thermochimica acta, 456,2007,75) study kinetics of reduction of iron oxides by hydrogen. Both documents fail to disclose any specific teaching for energy storage systems.

In consequence, there is a need for further, particularly improved, energy storage systems. Thus, it is an object of the present invention to mitigate at least some of these drawbacks of the state of the art. In particular, it is an aim of the present invention to provide energy storage systems that are more reliable and/or safer than known systems.

These objectives are achieved by the system as defined in claim 6 and reactors adapted to such systems as defined in claim 1. Further aspects of the invention are disclosed in the specification and independent claims, preferred embodiments are disclosed in the specification and the dependent claims.

## Description of the invention

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:

As used herein, the term "a", "an", "the" and similar terms used in the context of the present invention (especially in the context of the claims) are to be construed to cover both the singular and plural unless otherwise indicated herein or clearly contradicted by the context. As used herein, the term "containing" shall include "comprising", "essentially consisting of" and "consisting of".

The term "fixed bed", also termed "packed bed", is known in the field. It particularly denotes a packing material

stationary and immovable located within a reactor vessel. Fixed beds are not agitated by a high mass flow of a fluid or by a stirring device and thus distinguish from a fluidized bed or a moving bed. The packing material of the fixed bed is adapted for allowing one or more fluids passing through the bed thereby allowing a chemical reaction. Suitable packing materials include particles (such as powders, granules and the like) shaped articles (such as Raschig rings) and structured packings. Fixed beds may be characterized by inter-particle porosity, intra-particle porosity and total porosity, c.f fig.4. Porosity may be determined by standard methods, particularly as described below.

The term "particle" is known in the field. It particularly denotes a material in a specific form that stays together under a given mechanical treatment. Particles may be characterized by its appearance (including porous, nonporous, granular), the particle size, particle size distribution, porosity, density and specific surface area. Particles can be solid, that means they exclusively consist of a solid and have a well-defined, continuous outer surface without openings or pores. The whole particle volume is filled with material. Typical examples of solid particles are particles as they result from solidification of droplets from a molten material, such as glass, wax or metals. The surface tension of these materials tries to create particles with minimal surface and closes openings and pores during the fabrication process. The particle density (ρ_part) of a solid particle is therefore equal to the material density (ρ_mat) of the solid material that composes the particle.

For solid particles, the particle volume can be obtained from the particle mass and the material's density. Densities for typical materials are tabulated properties and depend on the materials chemical composition. Particles can also be porous. The volume of a porous particle is filled with solid material and with void space. Porous particles can have at least one closed void within their interior (non-accessible empty space within the solid), or they have at least one opening or pore in their outer surface. Porous particles are typically a result from a drying process or a mechanical treatment where components of the porous particles are brought together and then form a particle (granules).

To distinguish between open space (a part of space that is not filled with a solid) between particles and within a particle, the concept of inter-particle and intra-particle porosity is used.

Inter-particle porosity (= voidage, bed porosity), ε_bed: The space between solid particles expressed as a percentage or fraction of the total volume. The inter-particle porosity of a fixed bed is used to indicate the available space for the flow of fluid for chemical reaction. The inter-particle porosity of a fixed bed is the ratio of the volume of voids between particles to the total volume of the bed. The value is dependent on the shape and size distribution of the particles, the ratio of the particle size to bed diameter, and the method used for filling the bed. The volume of the voids is the volume of the bed minus the volume of the particles. For spheres of uniform size, the range of attainable porosities is given by ordered packings with values from 0.26 (rhombohedral packing) to 0.48 (cubic packing). Disordered or random packings of spheres typically range from 0.44 (very loose random packing) to 0.36 (close random packing).

The volume of particles (V_part) can be calculated using the particle size and shape that can be determined using optical methods, such as light or electron microscopy. For spherical particles, the calculation of the volume is straightforward ($V_part = 4/3 \cdot pi \cdot r^3$; with r being the radius of the particle, pi being 3.14), for ill-shaped particles, approximations are typically used, the most frequent one uses a mean diameter of several measurements to get a mean radius (r = d/2).

For porous particles, the volume of the particle includes possible voids inside the particle, or pores. For clarity, a porous particle's mass will be less than the particle's volume multiplied by the materials density (ρ_mat), since the void or pores typically have a much lower density. For particles that are pigments, the DIN Norm EN ISP 8130-13 describes the use of laser scattering for particle size determination. It typically delivers a mean size that can be used to calculate a mean particle volume. The method is advantageous for micron sized materials (particle size in the range of 1 to 50 micrometer). For larger particles (more than 50 micrometer) sieve analysis is often used. The inter-particle porosity can be determined using the bed density (ρ_bed = m_bed/V_bed), the particle density (ρ_part = m_part/V_part) and the density of the fluid saturating the voids (ρ_fluid):

$$\varepsilon_bed = (\rho_part-\rho_bed) / (\rho_part-\rho_fluid)$$

Intra-particle porosity (= porosity), ε_part: The proportion of the volume of a porous particle that is not occupied by the solid itself. It is usually given as a fraction, percentage, or decimal. Gravel have typically a low or negligible fraction of voids, while saw dust or dry soil has a lot of pores or voids. The intra-particle porosity can be determined using the particle density (ρ_part = m_part/V_part), the material density (ρ_mat) and the density of the fluid saturating the voids (ρ_fluid):

$$\varepsilon_part = (\rho_mat-\rho_part) / (\rho_mat-\rho_fluid)$$

Total porosity ε_tot: The proportion of the volume of the fixed bed that is not occupied by the solid, dense

material. The total porosity can be determined using the bed density (ρ_bed = m_bed/V_bed), the material density (ρ_mat) and the density of the fluid saturating the voids (ρ_fluid):

$$\varepsilon_tot = (\rho_mat-\rho_bed)/(\rho_mat-\rho_fluid)$$

Theoretically, the total porosity is the combination of intra-particle porosity and inter-particle porosity and these porosities are related as follows:

$$\varepsilon_tot = (V_bed\cdot\varepsilon_bed+V_bed\cdot(1-\varepsilon_bed)\cdot\varepsilon_part)/V_bed$$
$$= \varepsilon_bed+\varepsilon_part-\varepsilon_bed\cdot\varepsilon_part$$

Multiple experimental techniques for determining characteristics of porous materials exist. Gas sorption with nitrogen is used for measurements involving pore diameters in the range form 0.4 - 300 nm (Klobes et al., 2006). Liquid intrusion by a non-wetting liquid (i.e. mercury porosimetry) is widely accepted for scales above 4 nm, particularly between 4 nm and 60 μm. (Espinal, 2012). Suitable particles in the context of this invention are particularly of diameter 0.01 um - 1.0 um (as defined by the above norm) and/or 2 - 80 $m^2$/g surface area.

The present invention will be better understood by reference to the **figures** where Figs. 1A, 2A and 3A show charging mode, while Figs. 1B, 2B and 3B show discharging mode of the inventive systems.

**List of references:**

| | |
|---|---|
| 1 | Reversible fuel cell<br>1a Water inlet,<br>1b Hydrogen outlet,<br>1c Water/oxygen outlet,<br>1d Air inlet,<br>1e Hydrogen inlet<br>1f Water/air outlet |
| 2 | Reactor<br>2a Reactor inlet; 2b Reactor outlet |
| 3 | Hydrogen-water separator<br>3a Separator inlet,<br>3b Hydrogen-rich phase outlet,<br>3c Water-rich phase outlet |
| 8 | Electrolyzer<br>8a Water inlet,<br>8b Hydrogen outlet,<br>8c Water/oxygen outlet |
| 9 | Fuel cell or Hydrogen Turbine<br>9a Air inlet,<br>9b Hydrogen inlet,<br>9c Water/air outlet,<br>9d Hydrogen outlet (in case of fuel cell) |
| 10 | Hydrogen-water separator for charging<br>10a Separator inlet,<br>10b Hydrogen-rich phase outlet,<br>10c Water-rich phase outlet |
| 11 | Hydrogen-water separator for discharging<br>11a Separator inlet,<br>11b Hydrogen-rich phase outlet,<br>11c Water-rich phase outlet |
| 4 | Hydrogen recycle |
| 5 | Water recycle |
| 6 | Purification of hydrogen |

7 Water feed
12a Power input(charging), 12b Power output(discharging)
13 Energy storage system

**Fig. 1** shows a first embodiment of the inventive system, comprising a reactor (2) as described herein, a reversible fuel cell (1) and a Hydrogen-Water Separator (3). In charging mode according to fig. 1A, power input (12a) is in operation and allows reduction reaction in reactor (2) as described herein. In discharging mode according to fig. 1B, power output (12b) is in operation driven by oxidation reaction in reactor (2) as described herein.

**Fig. 2** shows a second embodiment of the inventive system, comprising a reactor (2) as described herein, and a Hydrogen-Water separator (3). In this second embodiment, an electrolyzer (8) and a hydrogen turbine (9) are replacing the reversible fuel cell compared to the embodiment in Fig. 1. In charging mode according to fig. 2A, power input (12a) is in operation and allows reduction reaction in reactor (2) as described herein; hydrogen turbine (9) is not in operation. In discharging mode according to fig. 2B, power output (12b) is in operation driven by oxidation reaction in reactor (2) and hydrogen turbine (9). Electrolyzer (8) is not in operation.

**Fig. 3** shows a third embodiment of the inventive system, comprising a reactor (2) as described herein, an electrolyzer (8) and a hydrogen turbine (9). In this third embodiment, the Hydrogen-Water separator (3) is replaced by a Hydrogen-Water separator for charging (10) and a Hydrogen-Water separator for discharging (11) when compared to the second embodiment. In charging mode according to fig. 3A, power input (12a) is in operation and allows reduction reaction in reactor (2) as described herein; hydrogen turbine (9) and separator (11) are not in operation. In discharging mode according to fig. 3B, power output (12b) is in operation driven by oxidation reaction in reactor (2) and hydrogen turbine (9). Electrolyzer (8) and separator (10) are not in operation.

**Fig. 4** shows solid particles (figure 4A), the interparticle volume for solid particles (figure 4B, hatched), porous particles (figure 4C), the intraparticle volume (hatched differently) and interparticle volume for porous particles (figure 4D).

**Fig. 5** shows how the size of a cavity is assessed. Fig. 5A presents a generic ellipsoid and its three principal radii a, b and c. Fig. 5B shows solid material and a cavity. Fig. 5C solid material, a cavity and the biggest ellipsoid that fits into the cavity.

In more general terms, in a **first aspect,** the invention relates to a specific reactor 2 comprising a reaction vessel 2c defining an inner volume, a compensation element 2d, an inlet and an outlet 2a, 2b, and an insulation 2f, characterized in that said inner volume is filled with a fixed bed and said compensation element is adapted to adjust said inner volume. Said fixed bed is (i) essentially free or free of large cavities as defined further detail below. Further, said fixed bed contains or consists of particles of formula (I), FeOx (I), where $0 \leq x \leq 1.5$ as defined in further detail below. The inventive reactor 2 allows the conversion of hydrogen to water (thereby capturing the thus obtained chemical energy) and its reverse reaction (thereby releasing hydrogen). The reactor is inherently explosion - proof. This aspect of the invention shall be explained in further detail below:
**Reactor 2:** The reactor is a unit able to perform a chemical reaction, particularly reduction and oxidation of FeOx (I) as discussed herein. The inventive reactor comprises a number of elements, particularly a reaction vessel, one or more compensation elements, one or more inlets and outlets, an insulation. Further elements may be present, e.g. a heating element and / or sensors for detecting oxygen. The skilled person is familiar with equipping a reactor with all elements necessary to perform the reaction described herein and to integrate the reactor in a system as described herein (2$^{nd}$ aspect) . The skilled person is also familiar with selecting materials adapted to the reaction conditions described herein. Requirements for reactor materials comprise long-term stability at high-temperatures during exposure to hydrogen and/or steam. Suitable materials for the reactor vessel include austenitic stainless steels with an enhanced corrosion resistance and low potential hydrogen damage, such as type 316L (1.4404) and type 316Ti (1.4571). Suitable seal materials include expanded graphite sheet.
As outlined below, the reactor is operated at close to ambient pressure and at temperatures in the range of 400°C. Accordingly, reactor 2, particularly reaction vessel 2c, is adapted to pressures below 5 bar, preferably below 2 bar and temperatures below 500°C.
**Reaction vessel 2c:** The inner volume of the reaction vessel may vary over a broad range, suitable are 1000 - 500000m$^3$, in particular 10000 - 500000m$^3$. The shape of the reaction vessel may be generally any shape known in the art; its design is particularly driven considering isolation and heating as well as manufacturing. Suitable are reaction vessels in the form of a cylinder or a sphere or a tube bundle, preferably a cylinder. Preferably, the outer geometry of the reactor vessel is simple, e.g. cylindrical or cuboid, and has a low surface to volume ratio to minimize heat losses.

As outlined herein, the reaction vessel is filled with particles of formula (I) in the form of a **fixed bed.** Accordingly, there is no need to include means for agitation and / or for transportation of particles. This is considered particularly advantageous, as it makes the reactor more robust and particularly useful in large scale applications.

In one embodiment, the fixed bed consists of particles of formula (I) in the form of **a compacted powder,** such as pellets. The compacted powder may be shaped in a way to enhance convective transport of mass and /or heat within the fixed bed.

In one embodiment, the fixed bed comprises elements adapted to enhance convective and/or conductive transport of mass and/or heat within the fixed bed (here this is defined as "structured fixed bed"). For example, the fixed bed can contain flow directing elements. In particular, such elements might be for example static mixers that are generally used to enhance transport of heat and mass.

In one further embodiment, the fixed bed contains materials that enhance conductive transport of heat within the fixed bed such as steel wool with a high stability under process conditions.

**Compensation element 2d.:** One or more compensation elements are included. The term describes an element to compensate a change in volume (compaction/expansion = breathing) of the fixed bed during the process. Accordingly, said compensation element is capable to adjust said inner volume. During the reaction described below, particles of formula (I) are oxidized or reduced. As a consequence thereof particle size changes. To ensure the inner volume is free of cavities, the one or more compensation element is implemented. Accordingly, the one or more compensation element is adapted to compensate volume dilatation / compression during operation of the reactor. Such a compensation element is known per se; it may be configured in the form of a membrane or in the form of a piston or in the form of a sponge or in the form of fibrous material or in the form of a bellow. Suitable fibrous materials are known and include inorganic materials obtained by spinning or drawing molten mineral or rock materials. Examples of such fibrous materials include mineral wool such as commercially available stone wool, slag wool, and glass wool.

Other such suitable materials can be metallic, such as stainless steel with an enhanced corrosion resistance and low potential hydrogen damage.

In particular, if more than one compensation element is implemented in the reactor, the two or more compensation elements can be arranged in series, e.g. a fibrous material such as stone wool can be arranged in series with a bellow to compensate the volume changes during the operation of the reactor.

**Inlet, Outlet 2a, 2b:** In- and Outlet are elements, adapted to fill and remove gases from said inner volume. Further, they are adapted to retain particulate material within the reactor vessel. Commercial valves may be used. It is apparent that such in- and outlet are in fluid communication with further units of the system described below. Depending on the operation mode, in- and outlet may exchange its function, i.e. inlet in charging mode and outlet in discharging mode. Typically, in- and outlet are positioned at opposite sides of the reactor, such as at the top and at the bottom of the reactor 2.

In a further advantageous embodiment, the reactor can comprise multiple inlets and multiple outlets which again might exchange their function depending on the operation mode of the reactor.

Further advantageously, the reactor can comprise a number of more than ten inlets and more than ten outlets.

**Insulation 2f**: The reactor 2 comprises a thermal insulation; such insulations are known per se. Thermal insulation of the reactor vessel reduces the amount of heating energy that has to be provided to the reactor. Requirements for insulations are low thermal conductivity and long-term stability at the respective temperatures. Suitable insulations include rock wool and/or vacuum chambers.

**Further elements:** The reactor may, as discussed above, comprise one or more additional elements.

The temperature of the charging reaction and the temperature of the discharging reaction are subject to multiple criteria. Lower temperatures are of advantage regarding heat loss of the system and ageing of the oxygen carrier material, while reaction kinetics are enhanced at higher temperatures. Regarding thermodynamic equilibrium between the reacting atmosphere and the solid oxygen carrier material, higher temperatures are favoured during the charging process and lower temperatures are favoured during the discharging process. Suitable ranges include:

- Charging: 200°C - 450°C, preferably 200°C -400°C, most preferably 200°C - 350°C.
- Discharging: 150°C - 400°C, preferably 150°C -350°C, most preferably 150°C - 300°C.

In an advantageous embodiment of the invention, the reactor itself does not comprise a **heating element.** To attain and maintain the specified temperatures of the charging and discharging process, advantageously, external heaters may be used that heat the fluid before entering the reactor. Therefore, the at least one inlet and the at least one outlet are advantageously configured to receive and transport heated gas, in particular a gas heated up to or above the reaction temperature.

In a further advantageous embodiment, the at least one inlet is heated by an external heating element (in particular wherein the external heating element is arranged outside the reactor). Correspondingly, the reactor is adapted to receive the reaction gas heated up to or above the reaction temperature.

In a further advantageous embodiment of the invention, the reactor comprises an internal or an external heater. Internal heaters may be used; they directly provide thermal energy to the fixed bed. Alternatively or additionally, external heaters may be used; they provide energy to the reactor vessel or the fluid entering the reactor.

In one embodiment, sensing elements, such as temperature and / or pressure sensors and / or oxygen sensors, are included.

In one embodiment, at least one unit (e.g. an inert gas or hydrogen supply) in fluid communication with said reaction vessel is included. Said unit may allow an inert gas or hydrogen to enter the reaction vessel and therefore to adjust the gas pressure and volume within the vessel, in particular during operation of the reactor.

In one embodiment, the reactor is equipped with at least one heat exchanger. The amount of required heating energy can be reduced by heat recovery. For example, a stream entering the reactor can be heated by a stream leaving the reactor in a heat exchanger.

**Particles of formula (I):** Formula (I) encompasses iron in oxidation state +/-0, +2 and +3 and consequently idealized formulae:

| | | |
|---|---|---|
| Fe | (Ia), x=0, | $Fe^{+/-0}$ |
| $FeO = FeO_1$ | (Ib); x=1, | $Fe^{+2}$ |
| $Fe_3O_4 = FeO_{4/3}$ | (Ic); x=4/3, | $Fe^{+2}$ and $Fe^{+3}$ |
| $Fe_2O_3 = FeO_{3/2}$ | (Id), x=1. 5, | $Fe^{+3}$. |

The above formula (I) also includes non-stoichiometric compounds, such as wüstite ($Fe_{1-z}O$, z<1) and mixtures of these compounds. Phase diagrams showing stability of iron oxides at various temperatures are known.

The above formula (I) further includes hydrates of the compounds of formula (I). For example, $Fe(OH)_2$ = FeO x $H_2O$ shall be covered by formula (Ib); similarly, $Fe_2O_3$ x $nH_2O$ is covered by $FeO_{3/2}$.

The above particles may be doped or mixed with other elements, which enhance the oxygen carrier's stability towards sintering and/or promote its reduction reaction and/or promote its oxidation reaction under process conditions. Such dopants are preferably present in an amount of 0-30%, more preferably 0-10% most preferably 0-3%. Examples of such dopants include Ce, W, Mo, Cr, Al, Si, Ca, Mg, Ti, V, Mn, Ni, Co, Cu, Pd, Pt, Rh, Zr, Y, Gd, Zn in metallic or any of their oxidized forms.

Particles of formula (I) are available from many natural and synthetic sources. Such particles are commercial items, and available for example as pigments from various suppliers.

The reactor may be charged either with iron oxide (the usually preferred way), since latter is an easy to handle material (not inflammable).

**Cavity-free filling:** Particles of formula (I) essentially fill the above described inner volume of reaction vessel 2c. Accordingly, the fixed bed makes up at least 90%, preferably at least 95%, much preferably at least 98% of said inner volume. The remaining volume may be occupied by other elements of the reactor, for example structuring, stabilizing, heating elements, or in- and outlets.

As discussed above, the fixed bed, comprising or consisting of particles of formula (I), is free of large cavities. The term cavity denotes a space within the reactor volume that does not contain particles of formula (I). Such cavities are defined (i) by a maximum volume and (ii) a maximum length. The volume of a cavity is the volume of the biggest ellipsoid that fits into the cavity. The volume of an ellipsoid is $V_{cavity} = V_{ellipsoid} = 4/3 \cdot \pi \cdot a \cdot b \cdot c$, where a, b, and c are the three principal radii of the ellipsoid.

In one embodiment, no cavities are present (i) where $V_{ellipsoid}$ is larger than $V_{max}$ = 20000 $mm^3$, while (ii) all three principal radii describing this volume are at least $c_{min}$ = 5 mm. Given the above formula the maximum extension of a cavity is below a = b = 5 mm and $c_{max}$ = 191 mm.

In one further embodiment, no cavities are present (i) where $V_{ellipsoid}$ is larger than $V_{max}$ = 10000 $mm^3$, while (ii) all three principal radii describing this volume are at least $c_{min}$ = 3 mm. Given the above formula the maximum extension of a cavity is below a = b = 3 mm and $c_{max}$ = 265 mm.

Due to this cavity-free filling of the reactor, accumulation of hydrogen is prevented. The reactor is thereby inherently explosion - proof. In particular, due to the large size of the reactor, the weight of the fixed bed material in particular in the lower region of the reactor is high enough to prevent formation of cavities within the reactor. This is a significant advantage over the prior art, as no specific safety measures have to be taken. The reactor is thereby fit for commercial use on a large scale.

**Further considerations and embodiments** of the reactor 2 are outlined below:
In one further embodiment, the reaction vessel 2c is in fluid communication with at least one gas supply (referring to the unit in fluid communication with the reaction vessel). Implementing such gas supply is a further safety measure. It can be an inert gas supply (typically an air separation unit delivering nitrogen) or a hydrogen supply, in connection to the reactor's inner volume, and controlled by at least one pressure measuring element. This gas supply can be used in

emergency situations to balance pressure reduction inside the reactor as a result of cooling (e.g. if the reactor is switched from hydrogen storage to hydrogen release, where the latter is often at lower temperature), or if the reactor is shut down (e.g. for maintenance or control). Pressure reductions inside the reaction vessel can also be the result of hydrogen absorption through reaction with the iron oxide if latter is substoichiometric, and the amount of steam is not equal to the amount of absorbed hydrogen. In most cases, at least two (at least one redundant) inert gas supplies will be used. During normal operation, the injection of inert gas is not preferred as it dilutes the hydrogen.

In a **second aspect,** the invention relates to an energy storage system 13 adapted to convert electrical energy into chemical energy and storing the same ("charging") and its reverse process ("discharging"). Key unit of such system 13 is a reactor 2 as described herein. The inventive systems are useful for compensating long-term fluctuations observed in production of renewable energy. This aspect and various embodiments of this system shall be explained in further detail below:

In one embodiment, c.f. fig. 2, the invention provides for an energy storage system 13 comprising a reactor 2 as described herein, said reactor being in fluid communication with a unit separating water from hydrogen 3. Said unit 3 in turn being in fluid communication with a turbine 9, e.g. hydrogen turbine.

In a further advantageous embodiment, the energy storage system 13 comprises further an electrolyzer 8. Said electrolyzer 8 being in fluid communication with reactor 2.

In one further embodiment a reversible fuel cell 1 might replace the electrolyzer 8 and the turbine 9, c.f. fig. 1. the invention provides for an energy storage system 13 comprising a reactor 2 as described herein, said reactor being in fluid communication with a unit operating as a reversible fuel cell 1 and a unit separating water from hydrogen 3.

In advanced embodiments of the inventive system, these units 1, 2, and 3 are split into separate units (e.g. unit 1 into units 8 and 9; unit 3 into units 10 and 11) or the units are equipped with further elements, as described in further detail herein.

In one further embodiment, not shown in the figures, the invention provides for an energy storage system 13 comprising a reactor 2 as described herein, said reactor being in fluid communication with a first separating unit 10 during charging mode and in fluid communication with a second separating unit 11 during discharging mode.

It is apparent that according to this embodiment, said separating unit 3 is replaced by a first separating unit 10 (in operation during charging) and a second separating unit 11 for (in operation during discharging).

In one further embodiment, c.f. fig. 4, the invention provides for an energy storage system 13 comprising a reactor 2 as described herein, said reactor 2 being in fluid communication with an electrolyzer 8 and a first separating unit 10 during charging mode and said reactor 2 being in fluid communication with a second separating unit 11, which in turn is in fluid communication with a turbine, e.g. hydrogen turbine 9 during discharging mode.

It is apparent that according to this embodiment, said reversible fuel cell 1 is replaced by an electrolyzer 8 and a turbine 9. Further, said separating unit 3 is replaced by a first separating unit 10 for charging and a second separating unit 11 for discharging mode

In one further embodiment, not shown in the figures, a water - hydrogen separating unit 3' is integrated within the reactor 2. This may be implemented by a storage element ("chamber"), said storage element being located within the reactor and said storage element comprising a microporous and hygroscopic material (II). Suitable materials (II) include zeolites (including molecular sieves), silica, calcium oxide, activated alumina and magnesium oxide. Such unit 3' may replace unit 3, 10 or 11 or be implemented in addition to either of the afore-mentioned units.

The above units, except reactor 2, are known per se and may be scaled and / or adapted by the skilled person to comply with the uses described herein. Further details on these units is provided below:

A **reactor 2** is a unit described above, first aspect of the invention.

A **hydrogen water separator 3, 3', 10, 11** is a unit able to separate the two components. Such units are known and include condensators and desiccators, membrane separators. The conversion of hydrogen to water during the charging process is thermodynamically limited, i.e. the stream leaving the reactor contains both, hydrogen and water. Recycling of unreacted hydrogen to the reactor (4 in figs. 1, 2 and 3) requires removal of water in a separator (3, 10, 11 in figs. 1, 2 and 3).

Established methods for the separation of water and hydrogen include condensation of water, adsorption of water in a desiccator, and membrane separation. Depending on the detailed locally available media and characteristics (water, heating sources, size of installed photovoltaics, season, geographic location), different techniques are preferred:

a) Condensation type separators: In areas with abundant cooling water or in cold climates, condensation type separators for water and hydrogen can be the most cost effective solution. In locations where heat is easily available, absorber based separation of water and hydrogen may be the best option. Such systems can operate over a broad range of temperature, depending on the type of absorber. Silica gels for example are useful at conditions starting at 50 degree Celsius and may be operated up to above 200 degree Celsius. Zeolite and molecular sieve based systems typically require higher water desorption temperature. This is advantageous, however, since the water rich hydrogen stream leaving the reactor is at elevated temperature, and in an ideal case, the water/hydrogen separation

happens at a similar or the same temperature, thus essentially operating isothermal. This is much preferred as essentially no cooling down and re-heating of the hydrogen stream is needed.

b) Desiccator: A desiccator is a vessel filled with a fixed bed, through which the mixture to separate can flow. The fixed bed consists of at least one material of the group of water adsorbing materials. The group of water adsorbing materials includes zeolites (including molecular sieves), silica, calcium oxide, activated alumina and magnesium oxide.

The desiccator can be included within the here described vessel, i.e. it can be occupying part of the inner volume of the reactor. Such arrangements are of interest due to safety constraints, as all hydrogen handling is done within a clearly defined, well shielded area. Moreover, heat loss due to additional walls and pipes is reduced. Therefore, desiccators located inside the reactor, or directly adjacent with a significant contact area to the reactor, such as a common wall, are often preferred. In such arrangement, valves may be located outside of the reactor, to reduce the heat stress on such more sensitive equipment. Desiccators operate at two temperatures, at least, a first temperature (the lower one) where water is removed and the hydrogen system is dried, and a second temperature (the higher temperature) where water is leaving the desiccator and the desiccator's material is regenerated (dried). In addition to the above described temperature-swing-operation, other desiccators are known that run in pressure-swing- or pressure-temperature-swing-operation. Application of such desiccators is generally feasible, however temperature-swing systems are considered to be simpler and therefore more preferred.

In lieu of one single separator 3, a first and a second separator 10, 11 may be present. The first separator 10 removes $H_2O$ from the stream which leaves the reactor during charging. The separation could be based on a molecular sieve taking up water, or a membrane with a higher permeability for one of the gases, or on condensation of steam. The second separator 11 splits the stream, which leaves the reactor during discharging, into a stream of higher hydrogen fraction and a stream of lower hydrogen fraction. The separation could be based on a molecular sieve taking up water (operated in swing mode), or a membrane with a higher permeability for one of the gases, or on condensation of steam.

A **reversible fuel cell 1** is a unit combining the function of a fuel cell and of an electrolyzer. Such reversible fuel cells are commercial items or may be manufactured according to known methods.

A **Fuel cell 9** is an electrochemical generator wherein the reactants are supplied from outside. According to this invention, hydrogen is combined with oxygen or air to produce electrical energy. Fuel cells are commercial items.

An **Electrolyzer 8** is a unit cleaving water into oxygen and hydrogen, thereby consuming electrical energy. Electrolyzers are commercial items.

In addition to the units describe above, the inventive system 13 may be combined with further units, particularly to increase efficiency and / or safety. Fluid communication between the units is enabled by piping systems, including pipes, valves, and sensors, as conventional in the field. As mentioned above, reactants hydrogen, water and air move through the various units of the inventive system, the compound of formula (I) is not transported and remains within reactor 2. This is a substantial advantage over systems known from DE 10 2017 201 861.

A **turbine 9** here refers advantageously to a hydrogen turbine. A hydrogen turbine is a gas turbine, adapted to burn hydrogen gas. The turbine 9 might be complemented with further units for energy production e.g. in a setting with a power plant.

**Embedding of the system:** In one embodiment, the present system 13 is connected to a heat distribution network (district heating). The network can transport heat - that is not integrated within the system 13 - for example in the form of steam to nearby locations such as residential buildings, where the heat can be used for example for space heating or water heating.

In one embodiment, the present system 13 is electrically connected to an electrical station, via power in- and output 12a, 12b. The electrical station may be connected to the electrical grid and / or (directly) to other electric power plants (e.g. hydro power plant) and/or local (renewable) electric energy sources (e.g. wind farm, photovoltaic power station).

**Pumps, compressors:** Further, a pump or a compressor may enable flow of hydrogen for hydrogen recycling. Hydrogen compressors or pumps are commercially available in the form of membrane pumps, rotary pumps, piston pumps and others. Since only low pressure differences are used in the here described systems, rotary and membrane pumps are suitable. Preferably, the pump is encapsulated with a gas impermeable shell, rendering hydrogen release improbable. The separated water which is produced during hydrogen recycling can be stored to be used in the discharging step. Alternatively, the separated water can also be used in the electrolyzer during the charging step. The reuse of water inside the system is often preferred since the invention's components typically need water of high purity. Further, a pump or a compressor may enable the flow for water feeding and water recycling.

**Measurement/Control System:** The here described energy storage system typically requires a control unit, either containing a computer or a microcontroller. In some cases, also a remote controlled option using a data transmission may be used. Whilst controllers are known to the person skilled in the art, the here described system need at least one pressure controller, at least one temperature measurement. Usually, several temperature measurements and/or several

gas sensors (oxygen sensors) will be used to monitor the system.

**Safety:** The inventive system benefits from improved safety, this shall be explained in further detail: As a **first** safety measure, the reactor and associated units / elements, such as water separator or valves and sensors are best arranged in a way to minimize tube length, number of connectors and the area of the outer wall, separating the hydrogen containing parts from the outside (air). While later is common standard in good engineering praxis, the inside of the reactor is characterized by the fact that it is essentially full, as described above. A **second** safety measure is the very low pressure under which the inventive system operates. The reactor operates essentially at atmospheric conditions, thus reducing outflow (pressure is slightly higher than atmospheric pressure of the air outside) of hydrogen in case of a leak, or inflow of air (if the reactor is at a lower pressure than the atmosphere outside). In both cases, dangerous mixtures of hydrogen and air could result in flames or explosions. This second safety measure is further beneficial to the reactor weight and manufacturing costs, as thinner walls can be used, with lower overall metal requirement. A **third** (optional) safety measure is the use of at least one gas supply and being in fluid communication with the reactors inner volume, as described above. A **forth** safety measure is absence of moving elements (with the exception of the compensation element 2d and pumps / compressors. A **fifth** safety measure would be to install sensors for detecting oxygen. Such monitoring of the oxygen level allows to monitor the method described herein and performing them above the upper explosion limit (UEL) of hydrogen.

In a **third aspect,** the invention relates to the use of reactors and systems as described herein as well as to methods to store / release hydrogen by operating a reactor 2 as described herein and to store / release electrical energy by operating a system 13 as described herein. This aspect of the invention shall be explained in further detail below: Generally speaking, hydrogen acts as energy vector. In the inventive systems, the amount of molecular hydrogen is low compared to mechanical hydrogen storage at very low temperatures and / or high pressures and the pressure is low compared to pressurized hydrogen storage.

The present invention addresses the need to provide energy storage systems that are adapted to the requirements of large-scale production.

In one embodiment, the invention relates to a method for **storing hydrogen,** comprising the step of reducing a compound of formula (I) in a reactor as defined herein by feeding said reactor with a $H_2$-containing gas, thereby obtaining a reduced compound of formula (I) and water. As discussed herein, the hydrogen is preferably obtained from electrolysis of water and thereby free of carbon containing compounds. However, the hydrogen may be also obtained from other sources, such as conversion of natural gas or water-gas shift reaction. In such case, the hydrogen may contain impurities of carbon containing compounds, such as CO, CO2, CH4. It is preferred to use hydrogen with low carbon content, such as below 1000 ppm Carbon, preferably below 500 ppm Carbon, most preferably below 100 ppm Carbon (determined e.g. via GC-MS).

In one embodiment, the invention relates to a method for **generating hydrogen,** comprising the step of oxidizing a compound of formula (I) in a reactor as defined herein by feeding said reactor with water, thereby obtaining an oxidized compound of formula (I) and hydrogen.

In one embodiment, the invention relates to a method for **storing electrical energy,** said method comprising (a) electrolytically reducing water to obtain hydrogen; (b) reducing a compound of formula (I) in a reactor as defined herein by feeding said reactor with a hydrogen-containing gas obtained in step (a), thereby obtaining a $H_2$ / $H_2O$ gaseous mixture; (c) separating $H_2$ from said gaseous mixture and recycle said $H_2$ into said reactor.

According to this invention, electrical energy is consumed by conversion to chemical energy in a hydrogen ($H_2$) producing electrolyzer. The produced hydrogen is passed through a fixed bed reactor. The fixed bed consists of an iron based oxygen carrier in oxidized form ($FeO_x$). At elevated temperatures, the oxygen carrier is reduced by hydrogen, which produces steam ($H_2O$) and the oxygen carrier in reduced form ($FeO_y$, with $y < x$):

$$(x-y)\ H_2 + FeO_x \rightarrow (x-y)\ H_2O + FeO_y$$

While the reactor may be filled initially with $FeO_{3/2}$; the charging / discharging is between $4/3 \geq x \geq 0$.

The stream leaving the reactor consists of unreacted hydrogen and steam. This stream is fed to a first separator, where steam is (partially) removed from the stream. The resulting stream has a higher hydrogen fraction $H_2/(H_2O + H_2)$ and is fed back to the reactor.

In one embodiment, the invention relates to a method for **releasing electrical energy,** said method comprising (d) oxidizing a compound of formula (I) in a reactor as defined herein by feeding said reactor with water, preferably in the form of steam, thereby obtaining an oxidized compound of formula (I) and a $H_2O/H_2$ gaseous mixture, (e) separating $H_2$ from said gaseous mixture and (f) converting the chemical energy in said $H_2$ through oxidation to thereby obtain water and electrical energy.

According to this invention, water (in the form of steam) is passed through a fixed bed reactor. The fixed bed consists of an iron based oxygen carrier in reduced form (I'). At elevated temperatures, the oxygen carrier is oxidized by steam, which produces hydrogen and the oxygen carrier in oxidized form (I"):

$$(x-y)\ H_2O + FeO_y \rightarrow (x-y)\ H_2 + FeO_x;$$
$$(I`) \qquad\qquad (I``)$$

whereby x > y

The stream leaving the reactor consists of unreacted steam and hydrogen. This stream is fed to a second separator, where it is split into a stream of higher hydrogen fraction and a stream of lower hydrogen fraction. The stream of lower hydrogen fraction is fed back to the reactor. The stream of higher hydrogen fraction is fed to a turbine and/or a hydrogen consuming fuel cell, where chemical energy is converted to electrical energy.

In one embodiment, the invention relates to the use of a reactor 2 as described herein (i) for converting hydrogen to water and storing the thus obtained energy by reducing a compound of formula (I) and / or (ii) for converting water to hydrogen by oxidizing a compound of formula (I) thereby releasing the previously stored energy.

In one embodiment, the invention relates to the use of a system 13 as described herein (i) for storing electrical energy, thereby charging said system; and / or for releasing electrical energy, thereby discharging said system. Preferably, the system is charged during a summer season using surplus energy from renewable energy sources and discharged during a winter season to make up for less production of renewable energy.

The above methods and uses are described in further detail by reference to the figures 1, 2 and 3. In **charging mode** (fig. 1A, 2A, 3A) electrical energy is used to produce hydrogen. The thus produced hydrogen is used to reduce a compound of formula (I). In **discharging mode** (fig. 1B, 2B, 3B) water is reacted with the reduced compound of formula (I) to obtain an oxidized compound of formula (I) and hydrogen. The thus produced hydrogen is converted in a turbine and/or in a fuel cell to obtain electrical energy.

**In fig. 1A,** the system is charged: A reversible fuel cell 1 connected with power supply 12a is fed with water through line 7 into inlet 1a. The thus produced hydrogen leaves reversible fuel cell 1 through outlet 1b and enters reactor 2 through inlet 2a. Within the reactor, the hydrogen is reacted with oxidized compound (I) to obtain reduced compound (I) along with a mixture $H_2$ / $H_2O$. This mixture leaves reactor 2 through outlet 2b and enters separator 3 through inlet 3a. Water leaves the separator through outlet 3c and may be recycled 5 or discharged. The hydrogen leaves separator 3 through outlet 3b. This $H_2$ may be recycled via line 4 or otherwise used.

**In fig. 1B,** the system is discharged: Reactor 2 is fed with water through line 7 and inlet 2a. Within the reactor, the water is reacted with reduced compound (I) to obtain oxidized compound (I) along with a mixture $H_2$ / $H_2O$. This mixture leaves reactor 2 through outlet 2b and enters separator 3 through inlet 3a. Water leaves the separator through outlet 3c and may be recycled via line 5 or discharged. The hydrogen leaves separator 3 through outlet 3b. This hydrogen is fed to the reversible fuel cell 1 at the hydrogen inlet 1e. Within the reversible fuel cell, this hydrogen is reacted with air, entering from inlet 1d, to obtain water and electrical energy, which is provided at power output 12b for further use. Non-converted hydrogen may be recycled via line 6 to the separator 3.

**In fig. 2A,** the system is charged: An electrolyzer 8 connected with power supply 12a is fed with water through line 7 into inlet 8a. The thus produced hydrogen is fed to reactor inlet 2a. Within the reactor, the hydrogen is reacted with oxidized compound (I) to obtain reduced compound (I) along with a mixture $H_2$ / $H_2O$. This mixture leaves reactor 2 through outlet 2b and enters separator 3 through inlet 3a. Water leaves the separator through outlet 3c and may be recycled 5 or discharged. The hydrogen leaves separator through outlet 3b. This hydrogen may be recycled through line 4 or otherwise used.

**In fig. 2B,** the system is discharged: Reactor 2 is fed with water through line 7 and inlet 2a. Within the reactor, the water is reacted with reduced compound (I) to obtain oxidized compound (I) along with a mixture $H_2$ / $H_2O$. This mixture leaves reactor 2 through outlet 2b and enters separator 3 through inlet 3a. Water leaves the separator through outlet 3c and may be recycled via line 5 or discharged. The hydrogen leaves separator 3 through outlet 3b. This hydrogen is fed to the turbine or fuel cell 9 at the hydrogen inlet 9b. Within the turbine or fuel cell, this hydrogen is reacted with air or oxygen, entering from inlet 9a, to obtain water and electrical energy, which is provided at power output 12b for further use. Non-converted hydrogen may be recycled via line 6 to the separator 3.

**In fig. 3A,** the system is charged: An electrolyzer 8 connected with power supply 12a is fed with water through line 7 into inlet 8a. The thus produced hydrogen is fed to reactor inlet 2a. Within the reactor, the hydrogen is reacted with oxidized compound (I) to obtain reduced compound (I) along with a mixture $H_2$ / $H_2O$. This mixture leaves reactor 2 through outlet 2b and enters separator 10 through inlet 10a. Water leaves the separator through outlet 10c and may be recycled via line 5 or discharged. The hydrogen leaves separator through outlet 10b. This hydrogen may be recycled through line 4 or otherwise used.

**In fig. 3B,** the system is discharged: Reactor 2 is fed with water through line 7 and inlet 2a. Within the reactor, the water is reacted with reduced compound (I) to obtain oxidized compound (I) along with a mixture $H_2$ / $H_2O$. This mixture leaves reactor 2 through outlet 2b and enters separator 11 through inlet 11a. Water leaves the separator through outlet 11c and may be recycled via line 5 or discharged. The hydrogen leaves separator 11 through outlet 11b. This

hydrogen is fed to the turbine or fuel cell 9 at the hydrogen inlet 9b. Within the turbine or fuel cell, this hydrogen is reacted with air or oxygen, entering from inlet 9a, to obtain water and electrical energy, which is provided at power output 12b for further use. Non-converted hydrogen may be recycled via line 6 to the separator 11.

To further illustrate the invention, the following, nonlimiting **example** is provided.

General:

A seasonal energy storage plant having an electric energy storage capacity of 1.1 TWh is charged during the period from April to September (6 months) and discharged during the period from November to February (4 months). The average discharging rate is about 380 MW (i.e. similar to the nominal power of the nuclear power plant Mühleberg, which went off-grid in December 2019). The combustion of about 80 kt hydrogen (efficiency 40% w.r.t. LHV) can provide these 1.1 TWh of electricity and about 1.65 TWh of heat. These 80 kt hydrogen are stored and released by the reactions described above. Thus, at least 2500 kt FeOx are required having a volume of about 2’500’000 $m^3$ (1 t per m3) .

Reactors:

The above is realized by 20 thermally insulated fixed bed reactors of inner volume about 125’000 $m^3$, inner diameter 80 m, height, 25 m (each similar in size to that of a large oil storage tank).

Each reactor is a gas tight vessel built of a material resisting the present operation conditions (high temperature). Each reactor has a at least a gas inlet and at least a gas outlet for fluids (hydrogen, steam, water). In a further advantageous embodiment, each reactor has multiple gas inlets and multiple gas outlets, in particular the inlets and outlets have the form of inlet and outlet tubes.

In a further advantageous embodiment, the reactor comprises a first array of gas inlet tubes and a second array of gas outlet tubes for the fluids. In particular, wherein the tubes of the first and/or second array have a distance of 1m to 10 m in between, in particular of 2m to 5m in between. In a further advantageous embodiment of the reactor, the tubes are aligned essentially parallel to a longitudinal axis of the reactor or are aligned essentially perpendicular to a longitudinal axis of the rector. In particular, an array of tubes is therefore aligned horizontally within a reactor or vertically within a reactor.

The reactor contains a fixed bed consisting of an iron based oxygen carrier material. The fixed bed is heated by preheating fluids entering the reactor. The main component of the oxygen carrier material is iron oxide in the form of a porous powder. The reactors do not contain means for agitation or for heating. The reactors are thermally insulated and contain a first and optionally a second compensation element. Rock wool in the reactor, serves as a first compensation element. The reactor ceiling can be adapted to serve as a second compensation element.

During the reduction and oxidation of the fixed bed, the bed loses and gains mass in the form of oxygen. The change in mass leads to a changes in volume of the fixed bed which is compensated by the above-described compensation elements.

Heat integration during discharging:

At times of low renewable energy production, the reactor is discharged (Nov. to Feb.). The discharging reaction $4\ H_2O\ (g) + 3\ Fe \rightarrow 4\ H_2 + 3\ FeO_{1.33}$ is exothermal and releases about 30 MJ/kmol $H_2$. The heat of evaporation is about 44 MJ/kmol $H_20$. Given an average hydrogen production rate of about0.2 kmol per second and reactor, about 6 MW of heat are produced in every reactor, while about 9 MW are used for water evaporation. Per reactor, the combustion of hydrogen produces an average of about 30 MW of heat. With 1 m of insulation (0.05 W/m K) each reactor has a heat dissipation of less than 1 MW. Thus, (partial) integration of heat from the combustion reaction and from the discharging reaction results in a maximum surplus of about 25 MW per reactor and about 500 MW in total.

Conclusion:

Overall, the integration of heat between the discharging reactor and the combustion reactor leads to a design which does not require additional heating during the discharging period. This is realized by using a reactor which is sufficiently large and sufficiently insulated. Due to the very large size of the reactor, the ratio between insulation volume and reactor volume is lower than 0.2.

In conclusion, the storage capacity of the reactor according to this example corresponds to a reactor of the same volume, wherein the hydrogen is stored at about 400 bar.

## Claims

1. A reactor (2) comprising

   - a reaction vessel (2c) defining an inner volume of 1000 $m^3$ or more,
   - a compensation element (2),
   - a gas inlet and a gas outlet (2a, 2b),
   - an insulation (2f),

   **characterized in that**

   - said inner volume is filled with a fixed bed, wherein;
     - said fixed bed contains or consists of particles of formula (I), $FeO_x$ (I), where $0 \leq x \leq 1.5$; and
     - said fixed bed is essentially free of cavities;
   - said compensation elements are adapted to adjust said inner volume.

2. The reactor according to claim 1, comprising more than one gas inlet and more than one gas outlet (2a, 2b) .

3. The reactor according to claim 2, comprising a first array of gas inlet tubes and a second array of gas outlet tubes, in particular, wherein the tubes of the first and/or the second array have a distance of 1 to 10m in between, in particular of 2-5m in between.

4. The reactor according to one of the preceding claims 2 or 3, wherein the tubes essentially parallel to a longitudinal axis of the reactor or are essentially perpendicular to a longitudinal axis of the reactor.

5. The reactor according to one of the preceding claims, wherein the reaction vessel (2c)

   - defines an inner volume of 10000 - 500000 $m^3$; and /or
   - is in the form of a cylinder or a sphere or a tube bundle, preferably a cylinder; and / or
   - does not contain means for agitation or transportation; and / or
   - does not contain means for heating the fixed bed; and / or
   - comprises a structured fixed bed.

6. The reactor according to one of the preceding claims, wherein said compensation elements

   - are adapted to compensate volume dilatation / compression during operation of the reactor; and / or
   - is configured in the form of a membrane, in the form of a piston or as a bellow,
   - is configured in the in the form of a sponge or in the form of a fibrous material.

7. The reactor according to one of the preceding claims, wherein the reactor does not comprise a heating element.

8. The reactor according to any of the preceding claims, further comprising one or more of the following elements:

   - at least one unit in fluid communication with said reaction vessel supplying an inert gas or hydrogen.

9. An energy storage system (13) comprising

   - a reactor (2) according to any of claims 1 - 8, said reactor being in fluid communication with
   - a unit (3) separating water from hydrogen, said unit (3) being in fluid communication with
   - a hydrogen turbine (9).

10. The energy storage system according to claim 9, further comprising an electrolyzer (8), said electrolyzer (8) being in fluid communication with said reactor (2).

11. The energy storage system according to claim 9 or 10, where said separating unit (3) is replaced by two separating units (10, 11), for charging and discharging mode.

**12.** The energy storage system according to any of claims 10 to 11, further comprising a microporous and hygroscopic material containing chamber within the reactor.

**13.** A method for storing hydrogen, comprising the step of reducing a compound of formula (I) in a reactor as defined in any of claims 1 to 8 by feeding said reactor with a hydrogen-containing gas, thereby obtaining a reduced compound of formula (I) and water.

**14.** A method for generating hydrogen, comprising the step of oxidizing a compound of formula (I) in a reactor as defined in any of claims 1 to 8 by feeding said reactor with water, thereby obtaining an oxidized compound of formula (I) and hydrogen.

**15.** A method for storing electrical energy, said method comprising:

(a) electrolytically reducing water to obtain hydrogen;
(b) reducing a compound of formula (I) in a reactor as defined in any of claims 1 to 8 by feeding said reactor with a hydrogen-containing gas, thereby obtaining a $H_2O/H_2$ gaseous mixture;
(c) separating $H_2$ from said gaseous mixture and recycle said $H_2$ into said reactor.

**16.** A method for releasing electrical energy, said method comprising:

(d) oxidizing a compound of formula (I) in a reactor as defined in any of claims 1 to 8 by feeding said reactor with water, thereby obtaining an oxidized compound (I) and a $H_2O/H_2$ gaseous mixture,
(e) separating $H_2$ from said gaseous mixture, and
(f) converting the chemical energy in said $H_2$ through oxidation to thereby obtain water and electrical energy.

**17.** Use of a reactor according to any of claims 1 to 8,

- for converting hydrogen to water and storing the thus obtained energy by reducing a compound of formula (I); and / or
- for converting water to hydrogen by oxidizing a compound of formula (I) thereby releasing the previously stored energy.

**18.** Use of an energy storage system according to any of claims 9 to 12 for storing electrical energy, thereby charging said system; and / or for releasing electrical energy, thereby discharging said system.

**Patentansprüche**

**1.** Ein Reaktor (2) umfassend

- einen Reaktionsbehälter (2c) der ein Innenvolumen von 1000 $m^3$ oder mehr definiert,
- ein Kompensationselement (2),
- einen Gaseinlass und einen Gasauslass (2a, 2b),
- eine Isolierung (2f),

**dadurch gekennzeichnet, dass**

- das Innenvolumen mit einem Festbett gefüllt ist, wobei;
    - das Festbett Teilchen der Formel (I), $FeO_X$ (I), enthält oder daraus besteht, wobei $0 \leq x \leq 1{,}5$; und
    - das Festbett im Wesentlichen frei von Hohlräumen ist;
- wobei die Kompensationselemente geeignet sind, das innere Volumen einzustellen.

**2.** Der Reaktor nach Anspruch 1, umfassend mehr als einen Gaseinlass und mehr als einen Gasauslass (2a, 2b).

**3.** Der Reaktor nach Anspruch 2, umfassend eine erste Anordnung von Gaseinlassrohren und eine zweite Anordnung von Gasauslassrohren umfasst, wobei insbesondere die Rohre der ersten und/oder der zweiten Anordnung einen

Abstand zueinander von 1 bis 10 m, insbesondere von 2 bis 5 m, haben.

**4.** Der Reaktor nach einem der vorangehenden Ansprüche 2 oder 3, wobei die Rohre im Wesentlichen parallel zu einer Längsachse des Reaktors oder im Wesentlichen senkrecht zu einer Längsachse des Reaktors angeordnet sind.

**5.** Der Reaktor nach einem der vorangehenden Ansprüche, wobei der Reaktionsbehälter (2c)

- ein Innenvolumen von 10000 - 500000 $m^3$ aufweist; und /oder
- die Form eines Zylinders oder einer Kugel oder eines Rohrbündels, vorzugsweise eines Zylinders, hat; und / oder
- keine Mittel zum Rühren oder Transportieren enthält; und / oder
- keine Mittel zur Beheizung des Festbetts enthält; und / oder
- ein strukturiertes Festbett enthält.

**6.** Der Reaktor nach einem der vorangehenden Ansprüche, wobei die Kompensationselemente

- geeignet sind, die Volumendilatation / Kompression während des Betriebs des Reaktors zu kompensieren; und / oder
- in der Form einer Membran, in der Form eines Kolbens oder als Balg ausgebildet sind,
- in der Form eines Schwamms oder in der Form eines Fasermaterials ausgebildet ist.

**7.** Der Reaktor nach einem der vorangehenden Ansprüche, wobei der Reaktor kein Heizelement aufweist.

**8.** Der Reaktor nach einem der vorangehenden Ansprüche, weiter umfassend ein oder mehrere der folgenden Elemente:

- mindestens eine Einheit in Fluidverbindung mit dem Reaktionsbehälter, die ein Inertgas oder Wasserstoff zuführt.

**9.** Ein Energiespeichersystem (13) umfassend

- einen Reaktor (2) nach einem der Ansprüche 1 bis 8, wobei der Reaktor in Fluidverbindung steht mit
- einer Einheit (3), die Wasser von Wasserstoff trennt, wobei die Einheit (3) in Strömungsverbindung mit
- einer Wasserstoffturbine (9) steht.

**10.** Das Energiespeichersystem nach Anspruch 9, weiter umfassend einen Elektrolyseur (8), wobei der Elektrolyseur (8) in Fluidverbindung mit dem Reaktor (2) steht.

**11.** Das Energiespeichersystem nach Anspruch 9 oder 10, wobei die Trenneinheit (3) durch zwei Trenneinheiten (10, 11) für den Lade- und Entlademodus ersetzt ist.

**12.** Das Energiespeichersystem nach einem der Ansprüche 10 bis 11, weiter umfassend eine Kammer mit mikroporösem und hygroskopischem Material innerhalb des Reaktors.

**13.** Ein Verfahren zur Speicherung von Wasserstoff, umfassend den Schritt der Reduktion einer Verbindung der Formel (I) in einem Reaktor nach einem der Ansprüche 1 bis 8 durch Beschicken des Reaktors mit einem wasserstoffhaltigen Gas, wodurch eine reduzierte Verbindung der Formel (I) und Wasser erhalten wird.

**14.** Ein Verfahren zur Erzeugung von Wasserstoff, umfassend den Schritt der Oxidation einer Verbindung der Formel (I) in einem Reaktor nach einem der Ansprüche 1 bis 8 durch Beschicken des Reaktors mit Wasser, wodurch eine oxidierte Verbindung der Formel (I) und Wasserstoff erhalten wird.

**15.** Ein Verfahren zur Speicherung von elektrischer Energie, wobei das Verfahren umfasst:

(a) elektrolytisches Reduzieren von Wasser, um Wasserstoff zu erhalten;
(b) Reduzieren einer Verbindung der Formel (I) in einem Reaktor nach einem der Ansprüche 1 bis 8 durch Beschicken des Reaktors mit einem wasserstoffhaltigen Gas, wodurch ein $H_2O$/ $H_2$-Gasgemisch erhalten wird;
(c) Abtrennen von $H_2$ aus dem Gasgemisch und Zurückführen des $H_2$ in den Reaktor.

**16.** Ein Verfahren zur Freisetzung von elektrischer Energie, wobei das Verfahren umfasst:

(d) Oxidieren einer Verbindung der Formel (I) in einem Reaktor nach einem der Ansprüche 1 bis 8 durch Beschicken des Reaktors mit Wasser, wodurch eine oxidierte Verbindung (I) und ein $H_2O$/ $H_2$-Gasgemisch erhalten wird,
(e) Abtrennen von $H_2$ aus dem Gasgemisch, und
(f) Umwandeln der chemischen Energie im $H_2$ durch Oxidation, um dadurch Wasser und elektrische Energie zu erhalten.

**17.** Verwendung eines Reaktors nach einem der Ansprüche 1 bis 8,

- zur Umwandlung von Wasserstoff in Wasser und zur Speicherung der so erhaltenen Energie durch Reduktion einer Verbindung der Formel (I); und / oder
- für die Umwandlung von Wasser in Wasserstoff durch Oxidation einer Verbindung der Formel (I), wodurch die zuvor gespeicherte Energie freigesetzt wird.

**18.** Verwendung eines Energiespeichersystems nach einem der Ansprüche 9 bis 12 zum Speichern elektrischer Energie, wodurch das System aufgeladen wird, und/oder zum Freisetzen elektrischer Energie, wodurch das System entladen wird.

## Revendications

**1.** Un réacteur (2) comprenant

- une cuve de réaction (2c) qui définit un volume intérieur de 1000 $m^3$ ou plus,
- un élément de compensation (2),
- une entrée de gaz et une sortie de gaz (2a, 2b),
- une isolation (2f),

**caractérisé en ce que**

- le volume intérieur est rempli d'un lit fixe, dans lequel ;
    - le lit fixe contient ou est constitué de particules de formule (I), $FeO_X$ (I), où $0 \leq x \leq 1,5$ ; et
    - le lit fixe est essentiellement exempt de vides ;
- les éléments de compensation étant adaptés pour ajuster le volume intérieur.

**2.** Le réacteur selon la revendication 1, comprenant plus d'une entrée de gaz et plus d'une sortie de gaz (2a, 2b).

**3.** Le réacteur selon la revendication 2, comprenant un premier ensemble de tubes d'entrée de gaz et un deuxième ensemble de tubes de sortie de gaz, en particulier les tubes du premier et/ou du deuxième ensemble étant espacés de 1 à 10 m, en particulier de 2 à 5 m.

**4.** Le réacteur selon l'une des revendications 2 ou 3 précédentes, dans lequel les tubes sont disposés sensiblement parallèlement à un axe longitudinal du réacteur ou sensiblement perpendiculairement à un axe longitudinal du réacteur.

**5.** Le réacteur selon l'une des revendications précédentes, dans lequel la cuve de réaction (2c)

- présente un volume intérieur de 10000 à 500000 $m^3$ ; et/ou
- a la forme d'un cylindre ou d'une sphère ou d'un faisceau de tubes, de préférence un cylindre ; et / ou
- ne contient pas de moyens pour l'agitation ou le transport ; et / ou
- ne contient pas de moyens de chauffage du lit fixe ; et / ou
- contient un lit fixe structuré.

**6.** Le réacteur selon l'une des revendications précédentes, dans lequel les éléments de compensation

- sont aptes à compenser la dilatation/compression du volume pendant le fonctionnement du réacteur ; et/ou
- se présentent sous la forme d'une membrane, sous la forme d'un piston ou sous la forme d'un soufflet,
- se présentent sous la forme d'une éponge ou d'un matériau fibreux.

**7.** Le réacteur selon l'une des revendications précédentes, dans lequel le réacteur ne comporte pas d'élément chauffant.

**8.** Le réacteur selon l'une des revendications précédentes, comprenant en outre un ou plusieurs des éléments suivants :

- au moins une unité en communication fluidique avec la cuve de réaction, fournissant un gaz inerte ou de l'hydrogène.

**9.** Un système de stockage d'énergie (13) comprenant

- un réacteur (2) selon l'une des revendications 1 à 8, ledit réacteur étant en communication fluidique avec
- une unité (3) qui sépare l'eau de l'hydrogène, ladite unité (3) étant en communication fluidique avec
- une turbine à hydrogène (9).

**10.** Le système de stockage d'énergie selon la revendication 9, comprenant en outre un électrolyseur (8), l'électrolyseur (8) étant en communication fluidique avec le réacteur (2).

**11.** Le système de stockage d'énergie selon la revendication 9 ou 10, dans lequel l'unité de séparation (3) est remplacée par deux unités de séparation (10, 11) pour le mode de charge et de décharge.

**12.** Le système de stockage d'énergie selon l'une des revendications 10 à 11, comprenant en outre une chambre contenant un matériau microporeux et hygroscopique à l'intérieur du réacteur.

**13.** Un procédé de stockage d'hydrogène comprenant l'étape de réduction d'un composé de formule (I) dans un réacteur selon l'une des revendications 1 à 8 en chargeant le réacteur avec un gaz contenant de l'hydrogène, obtenant ainsi un composé réduit de formule (I) et de l'eau.

**14.** Un procédé de production d'hydrogène comprenant l'étape d'oxydation d'un composé de formule (I) dans un réacteur selon l'une des revendications 1 à 8 en chargeant le réacteur avec de l'eau, obtenant ainsi un composé oxydé de formule (I) et de l'hydrogène.

**15.** Un procédé de stockage d'énergie électrique, ledit procédé comprenant :

(a) réduire de manière électrolytique de l'eau pour obtenir de l'hydrogène ;
(b) réduire d'un composé de formule (I) dans un réacteur selon l'une des revendications 1 à 8, en chargeant le réacteur avec un gaz contenant de l'hydrogène, ce qui permet d'obtenir un mélange de gaz $H_2O$/ $H_2$ ;
(c) séparer de $H_2$ du mélange gazeux et le recyclage de $H_2$ dans le réacteur.

**16.** Un procédé de libération d'énergie électrique, le procédé comprenant :

(d) oxyder un composé de formule (I) dans un réacteur selon l'une des revendications 1 à 8 en chargeant le réacteur avec de l'eau, obtenant ainsi un composé oxydé (I) et un mélange gazeux $H_2O$/ $H_2$,
(e) séparer de $H_2$ du mélange gazeux, et
(f) convertir l'énergie chimique dans $H_2$ par oxydation, pour obtenir ainsi de l'eau et de l'énergie électrique.

**17.** Utilisation d'un réacteur selon l'une des revendications 1 à 8,

- pour la conversion de l'hydrogène en eau et le stockage de l'énergie ainsi obtenue par réduction d'un composé de formule (I) ; et/ou
- pour la conversion de l'eau en hydrogène par oxydation d'un composé de formule (I), libérant ainsi l'énergie précédemment stockée.

**18.** Utilisation d'un système de stockage d'énergie selon l'une des revendications 9 à 12 pour stocker de l'énergie électrique, ce qui permet de charger le système, et/ou pour libérer de l'énergie électrique, ce qui permet de décharger le système.

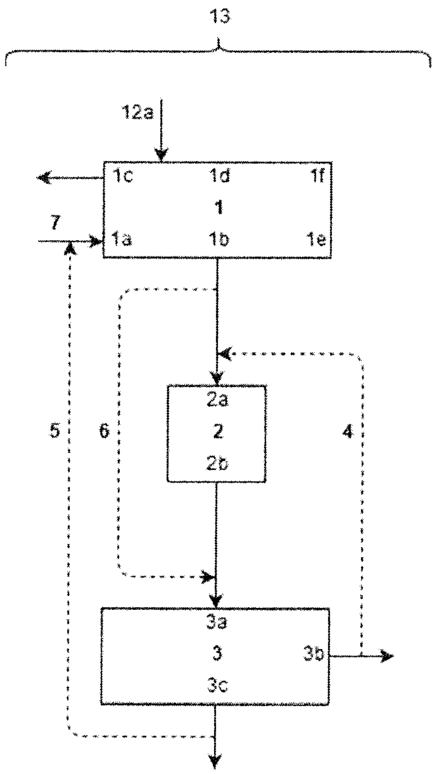


Fig. 1A

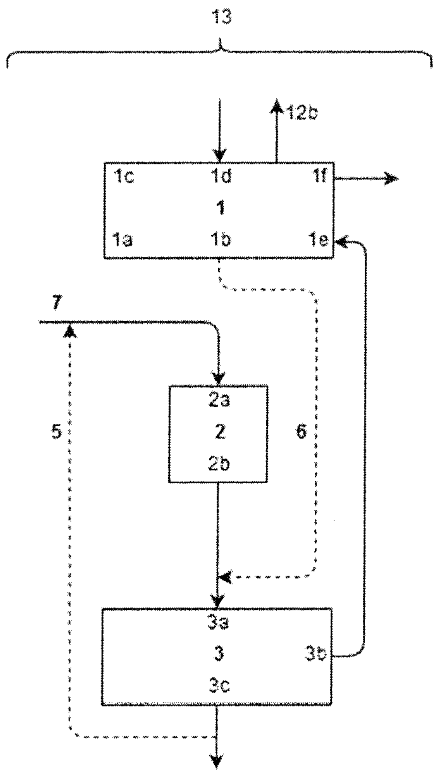


Fig. 1B

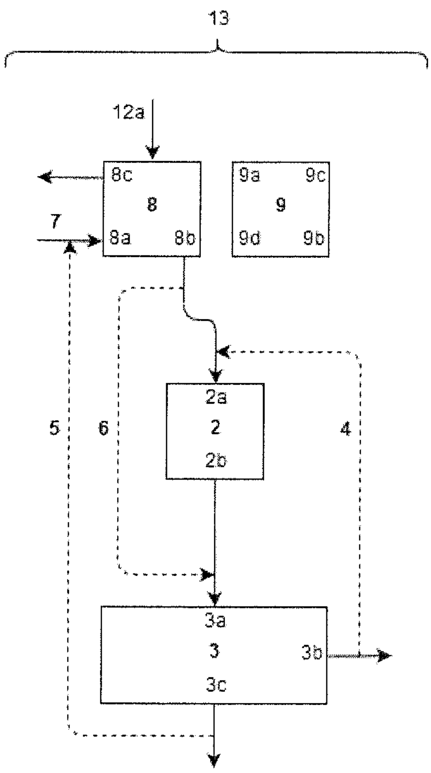


Fig. 2A

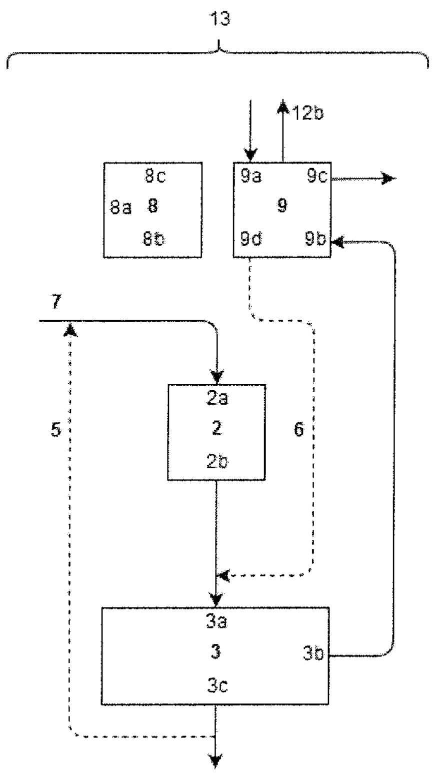


Fig. 2B

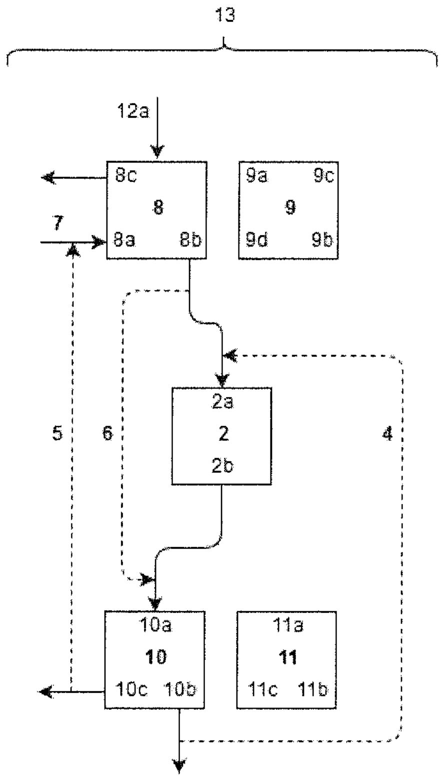


Fig. 3A

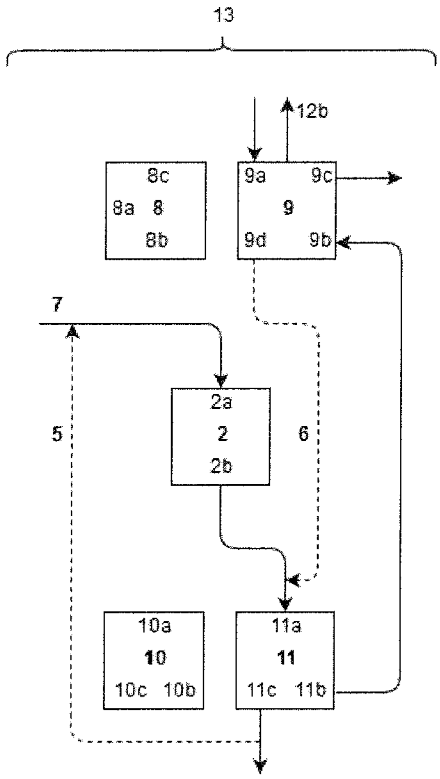


Fig. 3B

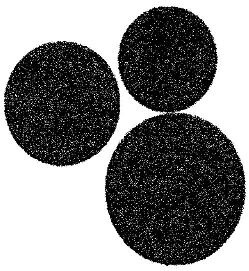

Figure 4A

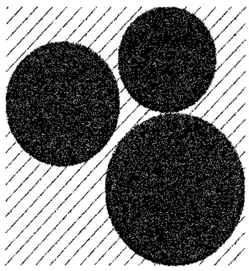

Figure 4B

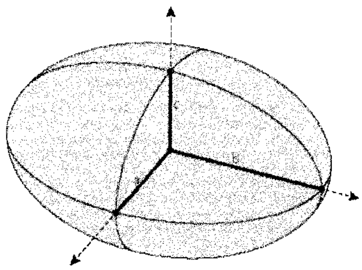

Figure 5A

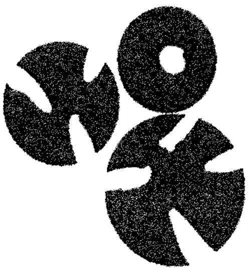

Figure 4C

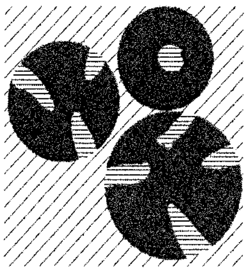

Figure 4D

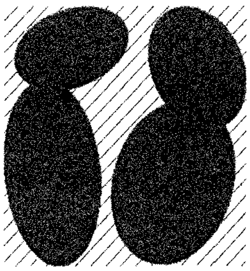

Figure 5B

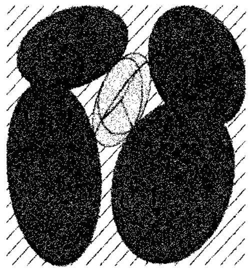

Figure 5C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102017201861
- EP 2020054844 W
- DE 102012217290


### Non-patent literature cited in the description


- **PINEAU et al.** *Thermochimica acta,* 2007, vol. 456, 75